# EUROPÄISCHE PATENTANMELDUNG

(11) **EP 1 513 232 A1**
(43) Veröffentlichungstag der Anmeldung: **09.03.2005**
(21) Anmeldenummer: 03020178.4
(22) Anmeldetag: 05.09.2003
(51) Int. Cl.: H01S 3/0941, H01S 3/23

(54) **Laservorrichtung sowie Verfahren zum Betrieb der Laservorrichtung**

(71) Anmelder: Hentze-Lissotschenko Patentverwaltungs GmbH & Co.KG, 25870 Norderfriedrichskoog (DE)
(72) Erfinder: Karpushko, Fedor, Dr., 44269 Dortmund (DE)
(74) Vertreter: Basfeld, Rainer, Dr. Dipl.-Phys.

(57) **Zusammenfassung**

Laservorrichtung umfassend mindestens eine Festkörperlasereinheit (1) mit mindestens einem aktiven Bereich (2), in dem Laserstrahlung (14) erzeugt werden kann, sowie mindestens eine Halbleiterlaservorrichtung (8), die Pumplicht für das optische Pumpen des mindestens einen aktiven Bereichs (2) der mindestens einen Festkörperlasereinheit (1) erzeugen kann, wobei die Laservorrichtung derart ausgebildet ist, dass das Pumplicht während des Betriebs der Laservorrichtung in dem mindestens einen aktiven Bereich (2) eine Mehrzahl von beabstandet zueinander angeordneten optisch gepumpten Kanälen (4) erzeugen kann, in denen jeweils ein Teilstrahl der Laserstrahlung (14) erzeugt werden kann. Weiterhin betrifft die vorliegende Erfindung ein Verfahren zum Betrieb einer derartigen Laservorrichtung.

## Beschreibung

Die vorliegende Erfindung betrifft eine Laservorrichtung umfassend mindestens eine Festkörperlasereinheit mit mindestens einem aktiven Bereich, in dem Laserstrahlung erzeugt werden kann, sowie mindestens eine Halbleiterlaservorrichtung, die Pumplicht für das optische Pumpen des mindestens einen aktiven Bereichs der mindestens einen Festkörperlasereinheit erzeugen kann. Weiterhin betrifft die vorliegende Erfindung ein Verfahren zum Betrieb einer derartigen Laservorrichtung gemäß dem Oberbegriff des Anspruchs 18.

Eine Vorrichtung und ein Verfahren der vorgenannten Art sind aus der US-Anmeldung US 2002/0181534 A1 bekannt. Es handelt sich bei der darin beschriebenen Laservorrichtung um einen Hochleistungslaser der als Festkörperlasereinheit einen sogenannten Slab eines Lasermaterials nutzt. Beispielsweise besteht dieser Slab aus drei Schichten, nämlich einem mittleren aktiven Bereich, der beispielsweise aus Nd:YAG besteht, sowie aus zwei äußeren Schichten, die die mittlere Schicht sandwichartig umgeben, wobei diese beiden äußeren Schichten beispielsweise aus undotiertem YAG bestehen können. Bei einem derartigen Slab ist der aktive Bereich eine vergleichsweise dünne Schicht, die senkrecht zur Schichtdicke eine wesentlich größere Ausdehnung aufweist. Die umgebenen Schichten aus undotiertem Material können dabei beispielsweise zur Pumplichtbündelung dienen. Weiterhin gewährleisten die umgebenden undotierten Schichten, dass in den der Pumplichtquelle zugewandten Randbereichen der aktiven Schicht keine Verluste bei Austritt aus Kantenbereichen auftreten, weil sich an die Ränder der aktiven Schicht die äußeren Schichten übergangslos anschließen.

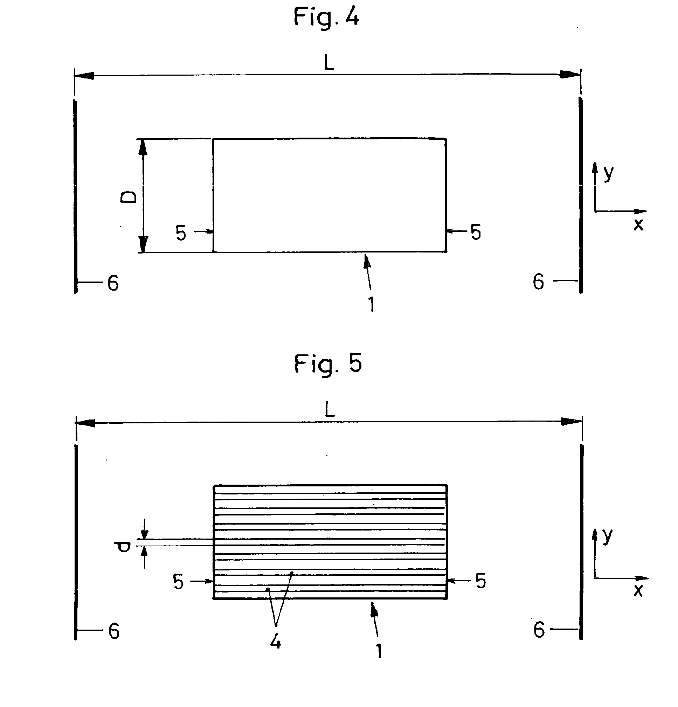

Aufgrund der Tatsache, dass der aktive Bereich zwar eine geringe Schichtdicke aufweist, trotzdem jedoch in einer zweiten zur Schichtdicke und zur Ausbreitungsrichtung des erzeugten Laserstrahls senkrechten Richtung eine vergleichsweise große Breite aufweist, ergibt sich bei einem derartigen Hochleistungslaser eine sehr große Divergenz. Die Divergenz des Laserstrahls ist insbesondere proportional zu dem Quotienten D/L, wobei D die Breite der Austrittsfläche und L die Länge des Resonators des Lasers ist (siehe dazu auch Fig. 4). Eine große Divergenz erweist sich bei sehr vielen Anwendungen als nachteilig, weil stark divergente Laserstrahlen nur mit großen Verlusten in eine Lichtleitfaser mit kleinem Querschnitt eingekoppelt werden können.

Bei der vorgenannten US-Patentanmeldung sind diverse Methoden aus dem Stand der Technik beschrieben, um auf die Strahlqualität eines aus einem Slab ausgekoppelten Laserstrahls zu verbessern. Insbesondere wird dies in der Regel durch aufwändige Strukturierung des Slabs versucht. Weiterhin erzeugen Laservorrichtungen mit einem Slab als Festkörperlasereinheit in der Regel Multimodelaserstrahlung, so dass im Stand der Technik mit ausgesprochen kompliziert aufgebauten Resonatoren versucht wurde, Einfluss auf das Modenspektrum zu nehmen.

Das der vorliegenden Erfindung zugrundeliegende Problem ist die Schaffung einer Laservorrichtung der eingangs genannten Art, bei der mit einfachen Mitteln eine vergleichsweise kleine Divergenz des von der Laservorrichtung erzeugten Laserstrahls erreicht werden kann. Weiterhin soll ein Verfahren zum Betrieb der eingangs genannten Art angegeben werden, mit dem ein Laserstrahl mit vergleichsweise kleiner Divergenz erzeugt werden kann.

Dies wird erfindungsgemäß hinsichtlich der Laservorrichtung durch eine Laservorrichtung der eingangs genannten Art mit den kennzeichnenden Merkmalen des Anspruchs 1 sowie hinsichtlich des Verfahrens durch ein Verfahren der eingangs genannten Art mit den kennzeichnenden Merkmalen des Anspruchs 22 erreicht. Die Unteransprüche betreffen bevorzugte Weiterbildungen der Erfindung.

Gemäß Anspruch 1 ist vorgesehen, dass die Laservorrichtung derart ausgebildet ist, dass das Pumplicht während des Betriebs der Laservorrichtung in dem mindestens einen aktiven Bereich eine Mehrzahl von beabstandet zueinander angeordneten optisch gepumpten Kanälen erzeugen kann, in denen jeweils ein Teilstrahl der Laserstrahlung erzeugt werden kann. Durch die Aufteilung des Pumplichtes in zueinander beabstandete Kanäle wird die Divergenz der gesamten Laserstrahlung letztlich durch die Divergenz der einzelnen innerhalb der einzelnen Kanäle erzeugten Teilstrahlen der Laserstrahlung bestimmt. Aufgrund der Tatsache, dass ein jeder der Teilstrahlen eine kleinere Breite aufweist als die gesamte Austrittfläche der beispielsweise als Slab ausgebildeten Festkörperlasereinheit, ist die Divergenz eines jeden der Teilstrahlen deutlich kleiner als die Divergenz der vorgenannten aus dem Stand der Technik bekannten aus Slabs ausgekoppelten Laserstrahlen. Damit ist aber auch die Divergenz der gesamten aus der erfindungsgemäßen Laservorrichtung ausgekoppelten Laserstrahlung kleiner als die der Laserstrahlung aus der vorbekannten Laservorrichtung.

Durch das Vorsehen von zueinander beabstandeten optisch gepumpten Kanälen kann die erfindungsgemäße Laservorrichtung ansonsten vergleichsweise einfach aufgebaut sein. Insbesondere müssen auch der aktive Bereich und der Resonator nicht sonderlich strukturiert werden, um Einfluss auf das Modenspektrum der Laservorrichtung zu nehmen.

Gemäß Anspruch 2 ist vorgesehen, dass die Laservorrichtung Mittel zur Einbringung des von der mindestens einen Halbleiterlaservorrichtung erzeugten Pumplichtes in den mindestens einen aktiven Bereich der mindestens einen Festkörperlasereinheit aufweist.

Diese Mittel können gemäß Anspruch 3 Linsenmittel umfassen, die das von der mindestens einen Halbleiterlaservorrichtung erzeugte Pumplicht zumindest in einer zur Ausbreitungsrichtung des Pumplichtes senkrechten Richtung zumindest teilweise kollimieren können.

Gemäß Anspruch 4 können dabei die Linsenmittel als Array von Zylinderlinsen ausgebildet sein.

Gemäß Anspruch 5 können die Mittel zur Einbringung eine Anpassungsoptik umfassen, die die Ausdehnung des Pumplichtes in der zu seiner Ausbreitungsrichtung senkrechten Ebene an die Ausdehnung des mindestens einen aktiven Bereichs der mindestens einen Festkörperlasereinheit anpassen kann.

Eine bevorzugte Ausführungsform gemäß Anspruch 6 sieht vor, dass die mindestens eine Halbleiterlaservorrichtung als Stack von Laserdiodenbarren ausgebildet ist. Insbesondere kann dabei jedem Laserdiodenbarren eine der vorgenannten Zylinderlinsen zur Kollimierung des von dem Laserdiodenbarren ausgehenden Lichtes in der Fast-Axis zugeordnet sein. Ein Stack von Laserdiodenbarren kann eine sehr große Pumpenergie erzeugen, so dass die erfindungsgemäße Laservorrichtung als Hochleistungslaser betrieben werden kann.

Anspruch 7 sieht vor, dass der aktive Bereich transversal gepumpt werden kann, insbesondere in einer zu der Ausbreitungsrichtung der Laserstrahlung senkrechten Richtung. Dabei kann der aktive Bereich insbesondere in einer Richtung senkrecht zu seiner dünnsten Ausdehnung gepumpt werden.

Anspruch 8 sieht dazu vor, das der aktive Bereich in der Ausbreitungsrichtung des Pumplichtes kleiner, insbesondere deutlich kleiner, als in den dazu senkrechten Richtungen ist. Der aktive Bereich kann somit durchaus dem aktiven Bereich der aus dem vorgenannten Stand der Technik bekannten Laservorrichtung entsprechen. Insbesondere kann jedoch der aktive Bereich erfindungsgemäß unstrukturiert sein.

Gemäß Anspruch 9 besteht die Möglichkeit, dass die optisch gepumpten Kanäle parallel zueinander in dem aktiven Bereich angeordnet sind. Aus parallel zueinander angeordneten optisch gepumpten Kanälen treten zueinander parallele Teilstrahlen der Laserstrahlung aus, so dass diese Teilstrahlen problemlos in einen gemeinsamen Fokusbereich fokussierbar sind.

Gemäß Anspruch 10 kann vorgesehen sein, dass die Tiefe der optisch gepumpten Kanäle in Ausbreitungsrichtung des Pumplichtes durch die Absorptionsfähigkeit des aktiven Bereichs für Licht mit der Wellenlänge des Pumplichtes gegeben ist. Insbesondere kann durch einen entsprechend großen Absorptionskoeffzienten erreicht werden, dass das Pumplicht nur ein kleines Stück weit in den aktiven Bereich eindringt, so dass auch in der Richtung, in der der aktive Bereich deutlich kleiner ist als in den dazu senkrechten Richtungen, die Dicke des aktiven Bereiches nicht komplett gepumpt wird. Auf diese Weise können optisch gepumpte Kanäle mit sehr kleinem Querschnitt realisiert werden.

Es besteht insbesondere die Möglichkeit, dass die Festkörperlasereinheit neben einem aktiven Bereich einen nicht aktiven Bereich, beispielsweise einen nicht mit laseraktiven Zentren dotierten Bereich aufweist. Diese beiden Bereiche können schichtartig übereinander angeordnet sein, wie dies aus dem vorgenannten Stand der Technik bekannt ist. Beispielsweise können dabei die optisch gepumpten Kanäle nur im Grenzbereich des aktiven Bereichs zu dem nicht aktiven Bereich angeordnet sein.

Gemäß Anspruch 11 kann vorgesehen sein, dass die Breite eines jeden der optisch gepumpten Kanäle in einer Richtung senkrecht zur Ausbreitungsrichtung der aus der mindestens einen Festkörperlasereinheit austretenden Laserstrahlung durch die Anordnung und/oder die Beschaffenheit der zur Kollimierung des Pumplichtes verwendeten Linsenmittel gegeben ist. Insbesondere kann bei sehr kleinem Abstand der Zylinderlinsen zu den einzelnen Laserdiodenbarren erreicht werden, dass die die Anteile des Pumplichtes, die jeweils für das Pumpen eines einzelnen optisch zu pumpenden Kanals verwendet werden, eine sehr geringe Breite aufweisen.

Gemäß Anspruch 12 besteht die Möglichkeit, dass die Laservorrichtung einen externen Resonator, insbesondere einen Resonator mit zwei Resonatorspiegeln aufweist. Erfindungsgemäß kann der Resonator sehr einfach aufgebaut sein, weil aufgrund der zueinander beabstandeten optisch gepumpten Kanäle eine geringe Divergenz erreicht werden kann, ohne dass mit zusätzlichen aufwendigen Mitteln auf das Modenspektrum der Laserstrahlung Einfluss genommen werden muss.

Alternativ dazu kann gemäß Anspruch 13 die Laservorrichtung einen internen Resonator aufweisen, der insbesondere durch zumindest teilweise verspiegelte Austrittsflächen des mindestens einen aktiven Bereiches der mindestens einen Festkörperlasereinheit gebildet wird.

Gemäß Anspruch 14 besteht die Möglichkeit, dass die Laservorrichtung eine Mehrzahl von Festkörperlasereinheiten umfasst, die insbesondere derart angeordnet sind, dass die aus den einzelnen Festkörperlasereinheiten austretenden Laserstrahlen im Wesentlichen parallel zueinander sind. Die aus den einzelnen Festkörperlasereinheiten austretenden Laserstrahlen lassen sich somit problemlos in einen gemeinsamen Fokusbereich fokussieren.

Durch die Verwendung mehrerer Festkörperlasereinheiten kann die Gesamtleistung der von der Laservorrichtung ausgebbaren Laserstrahlung gesteigert werden.

Gemäß Anspruch 15 ist vorgesehen, dass die mindestens eine Festkörperlasereinheit mit einem Kühlkörper wärmeleitend verbunden ist.

Gemäß Anspruch 16 ist vorgesehen, dass auf der Außenseite des Kühlkörpers eine Mehrzahl von Festkörperlasereinheiten angebracht ist, wobei aus diesen Festkörperlasereinheiten austretende Laserstrahlen im Wesentlichen parallel zueinander sind. Es besteht somit die Möglichkeit, einen Kühlkörper für mehrere Festkörperlasereinheiten zu verwenden.

Dabei kann Anspruch 17 vorsehen, dass der Kühlkörper einen rechteckigen, einen dreieckigen, einen quadratischen, einen fünfeckigen, einen sechseckigen, einen siebeneckigen, einen achteckigen oder einen anderen vieleckigen Querschnitt aufweist. Beispielsweise bei einem quadratischen Querschnitt können auf den Außenseiten des Kühlkörpers vier Festkörperlasereinheiten angeordnet sein. Gemäß einem anderen Beispiel können auf einem Kühlkörper mit achteckigem Querschnitt acht Festkörperlasereinheiten angeordnet werden. Durch diese vergleichsweise große Zahl von Festkörperlasereinheiten kann mittels der erfindungsgemäßen Laservorrichtung eine sehr große Ausgangsleistung erzielt werden.

Gemäß Anspruch 18 kann vorgesehen sein, dass die Festkörperlasereinheiten auf der Außenseite des Kühlkörpers in Ausbreitungsrichtung der Laserstrahlung hintereinander angeordnet sind, wobei insbesondere die optisch gepumpten Kanäle in Ausbreitungsrichtung der Laserstrahlung im Wesentlichen miteinander fluchten. Beispielsweise kann bei einer derartigen Anordnung ein Resonator mit zwei externen Resonatorspiegeln vorgesehen sein, so dass das von einzelnen Festkörperlasereinheiten ausgehende Laserlicht durch sämtliche andere Festkörperlasereinheiten hindurchtritt.

Gemäß Anspruch 19 kann vorgesehen sein, dass der Kühlkörper mindestens eine abgestufte Oberfläche aufweist, wobei auf mindestens zwei Stufen der gestuften Oberfläche jeweils mindestens eine Festkörperlasereinheit angeordnet ist. Insbesondere kann der Kühlkörper dabei derart gestaltet sein, dass das von den einzelnen Festkörperlasereinheiten ausgehende Laserlicht parallel zueinander aus der Laservorrichtung austritt, wobei die einzelnen Teilstrahlen der von den einzelnen Festkörperlasereinheiten ausgehenden Laserstrahlung übereinander beziehungsweise nebeneinander angeordnet sind. Das Licht einer einzelnen Festkörperlasereinheit tritt somit nicht durch eine andere Festkörperlasereinheit hindurch sondern über diese hinweg.

Gemäß Anspruch 20 kann vorgesehen sein, dass die Festkörperlasereinheit derart ausgebildet ist, dass die in ihr erzeugte Laserstrahlung im Bereich ihrer der Pumplichtquelle zugewandten Oberfläche eine Totalreflexion erfährt.

Gemäß Anspruch 21 kann dabei vorgesehen sein, dass die Austrittsflächen der mindestens einen Festkörperlasereinheit mit ihrer der Pumplichtquelle zugewandten Eintrittsfläche einen Winkel kleiner als 90° einschließen. Wenn beispielsweise die Austrittsflächen zumindest teilweise verspiegelt sind, wird auf diese Weise innerhalb der Festkörperlasereinheit Laserstrahlung erzeugt, die nicht im Kantenbereich zwischen Austrittsfläche der Laserstrahlung und Eintrittsfläche des Pumplichtes austritt sondern ein Stück weit von diesem Kantenbereich beabstandet. Dadurch werden Verluste im Bereich der Kante vermieden. Alternativ dazu könnte auch mit einem externen Resonator eine Verteilung der Laserstrahlung innerhalb der Festkörperlasereinheit erzielt werden, die das Austreten von Laserstrahlung in dem vorgenannten Kantenbereich verhindert.

Das Verfahren gemäß Anspruch 22 sieht vor, dass das Pumplicht in dem mindestens einen aktiven Bereich eine Mehrzahl von beabstandet zueinander angeordneten optisch gepumpten Kanälen erzeugt, in denen jeweils ein Teilstrahl der Laserstrahlung erzeugt wird. Der aktive Bereich kann somit vollständig unstrukturiert sein, weil durch die entsprechende Gestaltung des Pumplichtes in dem aktiven Bereich nebeneinander gepumpte und nicht gepumpte Abschnitte erzeugt werden, wobei sich die gepumpten Abschnitte kanalartig, insbesondere über die gesamte Länge des aktiven Bereichs erstrecken.

Alternativ besteht die Möglichkeit, dass die Kanäle sich nicht kontinuierlich erstrecken, sondern in ihrer Längsrichtung gepumpte und nicht gepumpte Abschnitte aufweisen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische perspektivische Darstellung einer Festkörperlasereinheit einer erfindungsgemäßen Laservorrichtung;
- Fig. 2: eine schematische Seitenansicht einer erfindungsgemäßen Laservorrichtung;
- Fig. 3: eine schematische Ansicht gemäß dem Pfeil III in Fig. 2;
- Fig. 4: eine schematische Draufsicht auf einen Resonator einer Festkörperlasereinheit gemäß dem Stand der Technik;
- Fig. 5: eine Fig. 4 entsprechende Ansicht auf einen Resonator einer Festkörperlasereinheit einer erfindungsgemäßen Laservorrichtung;
- Fig. 6: eine schematische Draufsicht auf eine weitere Ausführungsform einer erfindungsgemäßen Laservorrichtung;
- Fig. 7: eine schematische Draufsicht auf eine weitere Ausführungsform einer erfindungsgemäßen Laservorrichtung;
- Fig. 8a: eine schematische Seitenansicht einer weiteren Ausführungsform einer erfindungsgemäßen Laservorrichtung;
- Fig. 8b: eine Ansicht gemäß dem Pfeil VIIIb in Fig. 8a;
- Fig. 9a: eine schematische Seitenansicht einer weiteren Ausführungsform einer erfindungsgemäßen Laservorrichtung;
- Fig. 9b: eine Draufsicht auf die Laservorrichtung gemäß Fig. 9a;
- Fig. 10a: eine perspektivische Ansicht einer weiteren Ausführungsform einer Festkörperlasereinheit einer erfindungsgemäßen Laservorrichtung;
- Fig. 10b: eine schematische Seitenansicht der Festkörperlasereinheit gemäß Fig. 10a während des Betriebs;
- Fig. 11: eine schematische Seitenansicht eines Resonators mit einer weiteren Ausführungsform einer Festkörperlasereinheit einer erfindungsgemäßen Laservorrichtung;
- Fig. 12: eine schematische Seitenansicht einer weiteren Ausführungsform einer erfindungsgemäßen Laservorrichtung.

In einigen der Zeichnungen sind kartesische Koordinatensysteme zur besseren Orientierung eingezeichnet.

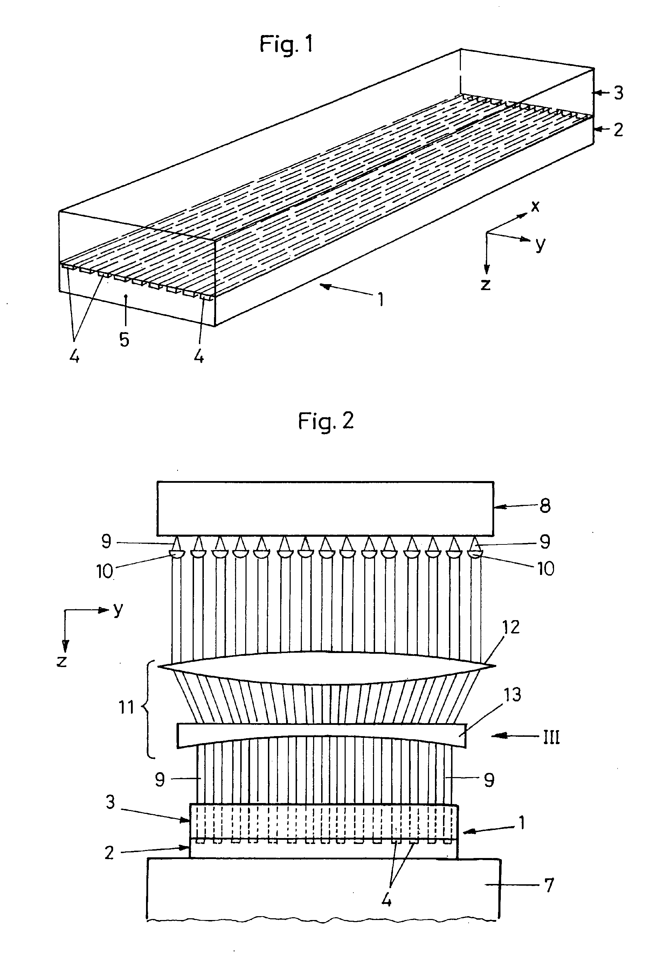

Aus Fig. 1 ist schematisch eine Festkörperlasereinheit 1 einer erfindungsgemäßen Laservorrichtung ersichtlich. Die Festkörperlasereinheit 1 ist als sogenannter Slab ausgeführt und umfasst einen aktiven Bereich 2 sowie einen nicht aktiven Bereich 3.

Der aktive Bereich 2 kann beispielsweise mit laseraktiven Zentren dotiert sein, wohingegen der nicht aktive Bereich 3 undotiert ist. Der aktive Bereich 2 der Festkörperlasereinheit 1 weist in z-Richtung eine vergleichsweise geringe Ausdehnung auf, wohingegen er in der dazu senkrechten y-Richtung deutlich ausgedehnter als in z-Richtung ist. In x-Richtung ist der aktive Bereich 2 ausgedehnter als in y-Richtung. Laserstrahlung, die in dem aktiven Bereich 2 erzeugt wird, breitet sich in positiver und in negativer x-Richtung in diesem aus.

Bei dem nicht aktiven Bereich 3 kann es sich beispielsweise um nicht dotiertes YAG handeln, wohingegen der aktive Bereich 2 aus Nd:YAG bestehen kann. Der aktive Bereich 2 und der nicht aktive Bereich 3 können durch an sich aus dem Stand der Technik bekannte klebstofffreie Verbindungstechniken miteinander fest verbunden sein. Derartige Slab-Strukturen werden im Stand der Technik (siehe dazu beispielsweise US 2002 181 534 A1 ) aus Gründen der Pumplichtbündelungen und der Wellenleitung des erzeugten Laserstrahls verwendet.

Anstelle von Nd:YAG können andere laseraktive Medien wie beispielsweise Nd:YVO₄, Nd:GdVO₄, Yb:YAG, Yb:KY(WO₄)₂ oder dergleichen verwendet werden.

Aus Fig. 1 sind weiterhin in dem aktiven Bereich in y-Richtung beabstandet zueinander angeordnete parallele optisch gepumpte Kanäle 4 eingezeichnet. In diesen gepumpten Kanälen 4 werden voneinander separierte Teilstrahlen der zu erzeugenden Laserstrahlung generiert. Aus Fig. 4 ist eine Festkörperlasereinheit 1 ersichtlich, die im Prinzip ähnlich aufgebaut sein kann wie die Festkörperlasereinheit 1 gemäß Fig. 1. Wenn eine derartige Festkörperlasereinheit 1 über die gesamte Breite D ihres aktiven Bereichs gepumpt wird, entsteht Laserstrahlung, die in y-Richtung eine Ausdehnung aufweist, die im Prinzip der Breite D der Austrittsflächen 5 entspricht. In Fig. 4 sind weiterhin Resonatorspiegel 6 eingezeichnet, von denen beispielsweise einer als Auskoppler und der andere als hochreflektierender Spiegel ausgebildet sein können. Die Entfernung zwischen den beiden Resonatorspiegeln 6 entspricht der Resonatorlänge L. Die Divergenz, die die aus dem Resonator austretende Laserstrahlung aufweist, ist dem Quotient D/L proportional. Aus diesem Grund wird bei einer vergleichsweise großen Breite D die austretende Laserstrahlung eine sehr große Divergenz aufweisen.

Aus Fig. 5 ist eine Festkörperlasereinheit 1 einer erfindungsgemäßen Laservorrichtung ersichtlich, die derart optisch gepumpt ist, dass sich in x-Richtung erstreckende, in y-Richtung zueinander beabstandete gepumpte Kanäle 4 entstehen, in denen Teilstrahlen der Laserstrahlung erzeugt werden. In Fig. 5 sind weiterhin Resonatorspiegel 6 eingezeichnet, die einen Resonator mit einer Resonatorlänge L bilden. Die aus den einzelnen optisch gepumpten Kanälen 4 austretenden Teilstrahlen weisen im Bereich der Austrittsfläche 5 eine Breite d in y-Richtung auf, die wesentlich kleiner ist als die Breite D der Austrittsfläche gemäß Fig. 4. Die Divergenz der aus der erfindungsgemäßen Laservorrichtung austretenden Laserstrahlung ist aufgrund der voneinander in y-Richtung beabstandeten Kanäle 4 proportional zu dem Quotienten d/L und damit wesentlich kleiner als die Divergenz der Laserstrahlung einer Laservorrichtung gemäß dem Stand der Technik, wie dies schematisch in Fig. 4 angedeutet ist.

Aus Fig. 2 und Fig. 3 ist eine erste Ausführungsform einer erfindungsgemäßen Laservorrichtung ersichtlich. Bei dieser Ausführungsform wird eine Festkörperlasereinheit 1 verwendet, die der Festkörperlasereinheit 1 gemäß Fig. 1 entspricht. Die Festkörperlasereinheit 1 ist mit der Unterseite ihres aktiven Bereichs 2 auf einem Kühlkörper 7 angebracht.

Als Pumplichtquelle dient eine Halbleiterlaservorrichtung 8, die als Stack von Laserdiodenbarren ausgebildet ist. Die einzelnen Laserdiodenbarren sind dabei in y-Richtung nebeneinander angeordnet und erstrecken sich in x-Richtung. Aus Fig. 2 ist ersichtlich, dass die einzelnen Laserdiodenbarren in y-Richtung derart voneinander beabstandet angeordnet sind, dass von den Laserdiodenbarren voneinander beabstandete Teilstrahlen 9 des Pumplichtes ausgehen.

Die y-Richtung in Fig. 2 entspricht der sogenannten Fast-Axis, das heißt der Richtung, in der die Divergenz der Teilstrahlen 9 der einzelnen Laserdiodenarrays sehr groß ist. In der dazu senkrechten x-Richtung, der sogenannten Slow-Axis, ist die Divergenz der Teilstrahlen vergleichsweise klein. Die einzelnen Laserdiodenbarren können derart aufgebaut sein, dass sich in x-Richtung erstreckende voneinander beabstandete linienförmige Emitter ausgebildet sind. Dies ist in der schematischen Ansicht gemäß Fig. 3 nicht abgebildet, weil aufgrund der zwar kleinen aber doch merklichen Divergenz in x-Richtung und somit in Slow-Axis-Richtung bei Fortschreiten der einzelnen Teilstrahlen in z-Richtung eine Überlagerung stattfindet, so dass bei Erreichen des aktiven Bereichs 2 der Festkörperlasereinheit 1 ein in x-Richtung im Wesentlichen gleichmäßig gepumpter Kanal 4 entsteht.

In Ausbreitungsrichtung des von der Halbleiterlaservorrichtung 8 ausgehenden Pumplichtes und somit in positiver z-Richtung schließt sich an die Halbleiterlaservorrichtung 8 ein Array von Zylinderlinsen 10 an, deren Zylinderachsen sich in x-Richtung erstrecken. Dieses Array von Zylinderlinsen 10 ist derart ausgebildet, dass die einzelnen Teilstrahlen 9 hinsichtlich ihrer Fast-Axis, das heißt in y-Richtung im Wesentlichen kollimiert werden. Auf diese Weise wirken die Zylinderlinsen 10 als Fast-Axis-Kollimationslinsen.

In positiver z-Richtung hinter dem Array von Zylinderlinsen 10 ist eine Anpassungsoptik 11 vorgesehen, die zur Anpassung der Größe der Halbleiterlaservorrichtung 8 an die Festkörperlasereinheit 1 dient. Die Anpassungsoptik 11 umfasst im abgebildeten Ausführungsbeispiel eine bikonvexe Zylinderlinse 12 und eine sich in positiver z-Richtung daran anschließende plankonkave Zylinderlinse 13, deren Zylinderachsen sich in x-Richtung erstrecken. Wie insbesondere aus Fig. 2 deutlich ersichtlich ist, werden durch die Anpassungsoptik 11 die Teilstrahlen 9 in y-Richtung leicht verdichtet und näher aneinandergerückt.

Die einzelnen Teilstrahlen 9 des Pumplichtes breiten sich in z-Richtung aus und sind dabei in x-Richtung im Wesentlichen über die gesamte Länge der Festkörperlasereinheit ausgedehnt, so dass sie wie parallel zueinander ausgerichtete dünne Schichten von Licht in den aktiven Bereich 2 eindringen.

Die Eindringtiefe der Teilstrahlen 9 in den aktiven Bereich 2 kann durch den Absorptionskoeffizienten des aktiven Bereiches 2 für Licht mit der Wellenlänge der Teilstrahlen 9 vergleichsweise gut bestimmt werden. Die Ausdehnung der Teilstrahlen 9 in y-Richtung ergibt sich durch die Anordnung des Arrays von Zylinderlinsen 10.

In Fig. 3 ist angedeutet, dass aus den Austrittsflächen 5 des aktiven Bereichs 2 der Festkörperlasereinheit 1 Laserstrahlung 14 nach links und nach rechts, das heißt in positiver und negativer x-Richtung austritt. Es besteht erfindungsgemäß die Möglichkeit, einen externen Resonator für die Festkörperlasereinheit 1 vorzusehen, beispielsweise in Form von Resonatorspiegeln, wie sie in Fig. 4 und Fig. 5 abgebildet sind. Weiterhin besteht auch die Möglichkeit, die Austrittsflächen 5 teilweise beziehungsweise einseitig total zu verspiegeln, so dass ein interner Resonator gebildet wird.

Es besteht die Möglichkeit, auf der in Fig. 3 unteren Seite des Kühlkörpers 7 eine weitere Festkörperlasereinheit anzuordnen, die ebenfalls von einer weiteren Halbleiterlaservorrichtung 8 gepumpt wird. Auf diese Weise können zwei zueinander parallele Laserstrahlen aus den beiden zueinander parallelen Festkörperlasereinheiten 1 austreten.

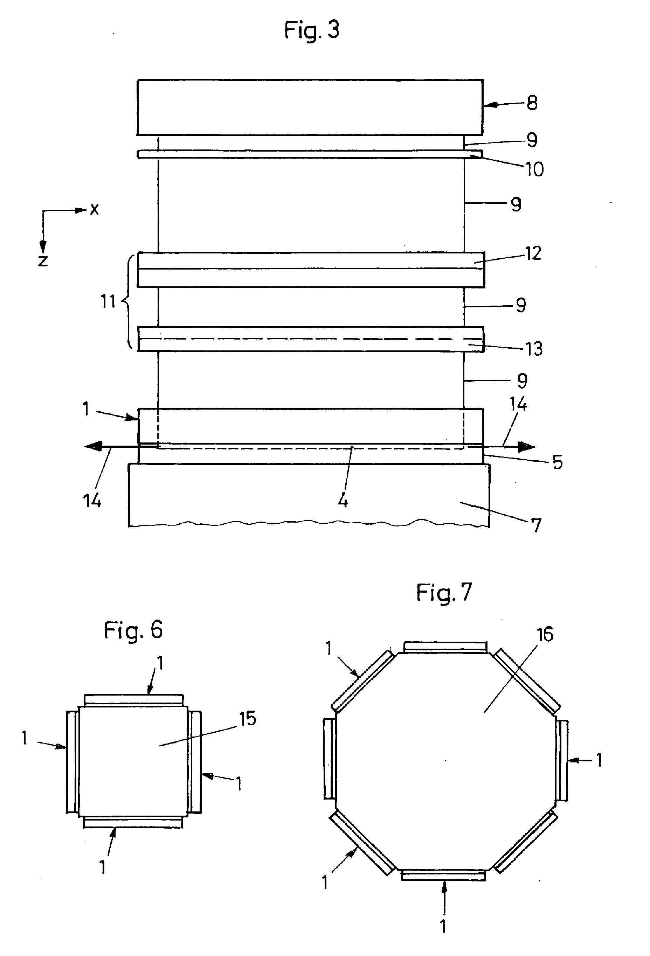

Aus Fig. 6 und Fig. 7 sind Kühlkörper 15, 16 mit einem quadratischen beziehungsweise mit einem achteckigen Querschnitt ersichtlich. Auf dem Kühlkörper 15 mit quadratischem Querschnitt sind auf den Außenflächen vier Festkörperlasereinheiten 1 angeordnet. Auf dem Kühlkörper 16 mit achteckigem Querschnitt sind auf den Außenseiten acht Festkörperlasereinheiten 1 angeordnet. Die aus einem jeden dieser Festkörperlasereinheiten 1 austretende Laserstrahlung 14 ist parallel zu der Laserstrahlung 14, die aus den anderen Festkörperlasereinheiten 1 austritt, so dass diese Laserstrahlungen problemlos in einen gemeinsamen Fokusbereich fokussiert werden können.

Es besteht erfindungsgemäß die Möglichkeit, Kühlkörper mit anderen beispielsweise dreizähligen oder fünfzähligen oder vielzähligen Geometrien vorzusehen, so dass drei, fünf oder eine Vielzahl von Festkörperlasereinheiten 1 auf deren Außenflächen angeordnet werden können.

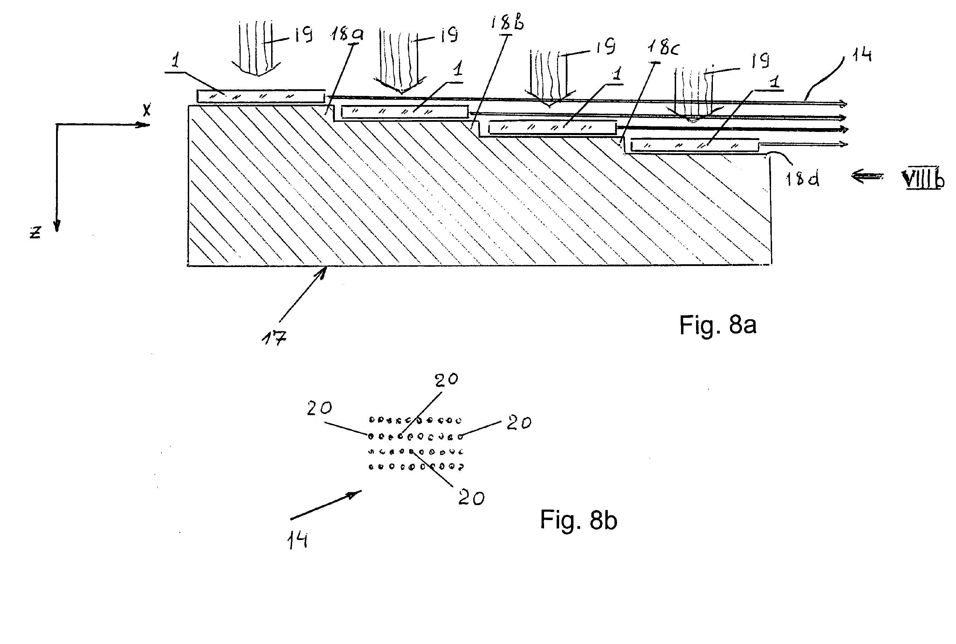

Aus Fig. 8a ist eine weitere Ausführungsform einer erfindungsgemäßen Laservorrichtung ersichtlich, bei der ein Kühlkörper 17 verwendet wird, der eine stufenförmige Oberseite aufweist. Die einzelnen Stufen 18a, 18b, 18c, 18d sind jeweils in Z-Richtung gegeneinander versetzt. Auf jeder der Stufen 18a, 18b, 18c, 18d ist eine Festkörperlasereinheit 1 angeordnet, die, wie dies durch die Pfeile 19 angedeutet ist, mit entsprechendem Pumplicht gepumpt werden kann. Aus jeder der Festkörperlasereinheiten 1 kann entsprechend der Ausführungsform gemäß Fig. 2 und Fig. 3 Laserstrahlung 14 austreten.

Aus Fig. 8b ist ersichtlich, dass die aus der Laservorrichtung austretende Laserstrahlung 14 aus einer Reihe von Teilstrahlen 20 besteht, die über und nebeneinander matrixähnlich in Reihen und Spalten angeordnet sind.

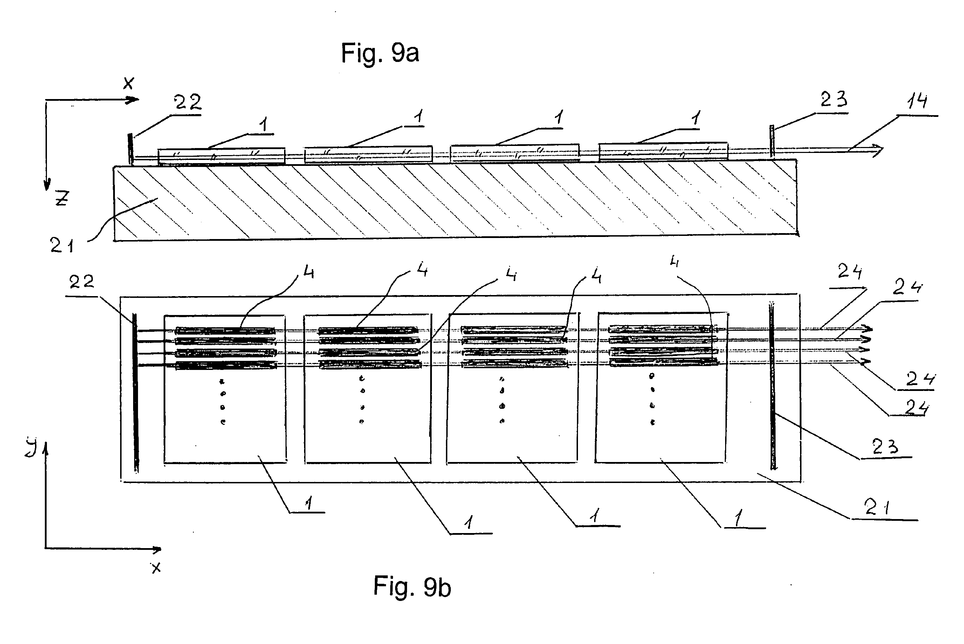

Fig. 9a und Fig. 9b zeigen eine weitere Ausführungsform einer erfindungsgemäßen Laservorrichtung, bei der eine Mehrzahl von Festkörperlasereinheiten 1 hintereinander auf einem Kühlkörper 21 angeordnet sind. Der Kühlkörper 21 weist auf seiner Oberfläche keine Stufen auf. Vielmehr sind sämtliche Festkörperlasereinheiten 1 hinsichtlich der z-Richtung in gleicher Höhe angeordnet. Auf diese Weise tritt das in einer der Festkörperlasereinheiten 1 erzeugte Laserlicht durch die anderen Festkörperlasereinheiten 1 hindurch. Insbesondere sind die für die einzelnen Festkörperlasereinheiten 1 vorgesehenen Pumplichtquellen derart angeordnet, dass die optisch gepumpten Kanäle 4 der einzelnen Festkörperlasereinheiten 1 in x-Richtung im Wesentlichen miteinander fluchten.

Bei der aus Fig. 9a und Fig. 9b ersichtlichen Laservorrichtung kann ein externer Resonator mit einem in Fig. 9a und Fig. 9b links abgebildeten hochreflektierenden Resonatorspiegel 22 und einem in Fig. 9a und Fig. 9b rechs abgebildeten Resonatorspiegel 23 versehen sein, der als Auskoppler dient. Aus Fig. 9b ist wiederum ersichtlich, dass die aus der Laservorrichtung austretende Laserstrahlung 14 aus einzelnen in y-Richtung beabstandet und benachbart zueinander angeordneten Teilstrahlen 24 besteht.

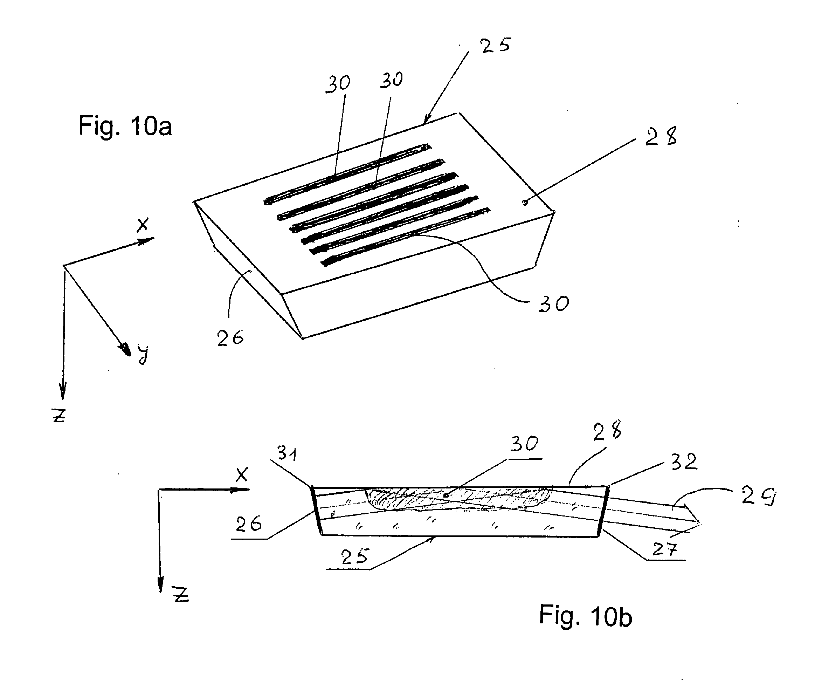

Aus Fig. 10a und Fig. 10b ist eine weitere Ausführungsform einer erfindungsgemäßen Festkörperlasereinheit 25 ersichtlich. Diese Festkörperlasereinheit 25 kann insbesondere vollkommen unstrukturiert sein, das heißt sie kann aus einem laseraktiven Medium wie beispielsweise Nd:YAG bestehen, ohne dass eine wie auch immer geartete Sandwichstruktur aus aktiven und nicht aktiven Bereichen vorgesehen ist. Um zu verhindern, dass die in der obersten Schicht erzeugte Laserstrahlung im Bereich einer Kante aus der Festkörperlasereinheit 25 austritt, schließen die Stirnflächen beziehungsweise Austrittsflächen 26, 27 mit der in Fig. 10b oberen Eintrittsfläche 28 für Pumpstrahlung einen Winkel ein, der kleiner ist als 90°. Bei der Ausführungsform gemäß Fig. 10a und Fig. 10b sind die stirnseitigen Austrittsflächen 26, 27 verspiegelt, wobei beispielsweise die in Fig. 10b linke Austrittsfläche 26 hoch reflektierend verspiegelt ist und die in Fig. 10b rechte Austrittsfläche 27 nur teilreflektierend verspiegelt ist, so dass diese als Auskoppler wirkt. Der Resonator wird somit zwischen den Austrittsflächen 26, 27 gebildet, wobei an der oberen Eintrittsfläche 28 für Pumpstrahlung die erzeugte Laserstrahlung 29 ebenfalls reflektiert wird.

Weiterhin ist nicht die gesamte Länge der Festkörperlasereinheit 25 gepumpt sondern nur ein sich beispielsweise über 2/3 der Länge der Festkörperlasereinheit 25 erstreckender Bereich der gepumpten Kanäle 30. Die Kanäle 30 erstrecken sich somit, wie dies aus Fig. 10a deutlich ersichtlich ist, nicht bis zu den stirnseitigen Rändern der Festkörperlasereinheit 25 beziehungsweise nicht bis an die Austrittsflächen 26, 27 angrenzend, so dass keine Laserstrahlung 29 entsteht, die in dem oberen Kantenbereich 31, 32 austreten könnte. In Fig. 10b ist durch die schraffierte Fläche die Ausdehnung der gepumpten Kanäle 30 angedeutet.

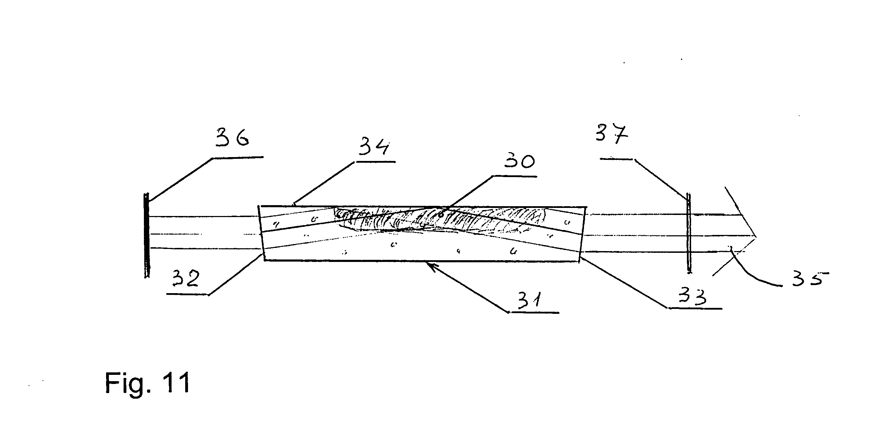

Aus Fig. 11 ist eine weitere Ausführungsform einer erfindungsgemäßen Festkörperlasereinheit 31 ersichtlich, die ebenfalls Austrittsflächen 32, 33 aufweist, die mit der oberen Eintrittsfläche 34 einen Winkel kleiner 90° einschließen. Allerdings ist der Winkel bei der Ausführungsform gemäß Fig. 11 derart gewählt, dass die aus den Austrittsflächen 32, 33 austretende Laserstrahlung 35 im Wesentlichen parallel zur oberen Eintrittsfläche 34 aus der Festkörperlasereinheit 31 austritt. Bei der Ausführungsform gemäß Fig. 11 sind externe Resonatorspiegel 36, 37 eingezeichnet, die beispielsweise als hochreflektierende Spiegel und als Auskoppler ausgebildet sein können. Auch in Fig. 11 ist wiederum durch die schraffierte Fläche die Ausdehnung der gepumpten Kanäle 30 angedeutet.

Die Ausführungsformen gemäß Fig. 10a und Fig. 10b beziehungsweise gemäß Fig. 11 können ebenfalls anstelle von Nd:YAG aus anderen laseraktiven Medien bestehen, wie dies im Voranstehenden zu der Festkörperlasereinheit 1 ausgeführt wurde.

Es besteht weiterhin die Möglichkeit, insbesondere die Festkörperlasereinheit 31 auch bei den Ausführungsformen mit mehreren Festkörperlasereinheiten gemäß Fig. 6, Fig. 7, Fig. 8a, 8b und gemäß Fig. 9a, 9b anstelle der Festkörperlasereinheit 1 einzusetzen.

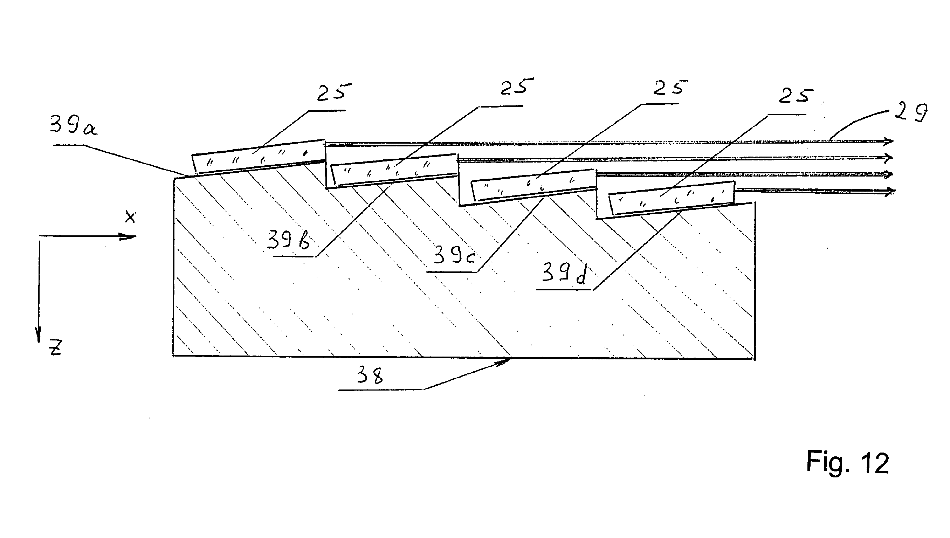

Aus Fig. 12 ist eine weitere Ausführungsform einer erfindungsgemäßen Laservorrichtung ersichtlich, bei der auf der Oberseite eines gestuften Kühlkörpers 38 Festkörperlasereinheiten 25 entsprechend der Ausführungsform gemäß Fig. 10a und 10b aufgebracht sind. Die Laservorrichtung gemäß Fig. 12 entspricht im Wesentlichen der Laservorrichtung gemäß Fig. 8a und 8b mit dem Unterschied, dass die Stufen 39a, 39b, 39c, 39d des Kühlkörpers 38 einen Winkel mit der Ausbreitungsrichtung (x) des Laserlichtes 29 einschließen, so dass die aus den einzelnen Festkörperlasereinheiten 25 austretenden Teilstrahlen parallel zueinander die Laservorrichtung verlassen und dabei jeweils oberhalb beziehungsweise unterhalb der aus den anderen Festkörperlasereinheiten 25 austretenden Teilstrahlen verlaufen.

## Patentansprüche

1. Laservorrichtung umfassend:
- mindestens eine Festkörperlasereinheit (1, 25, 31) mit mindestens einem aktiven Bereich (2), in dem Laserstrahlung (14, 29, 35) erzeugt werden kann;
- mindestens eine Halbleiterlaservorrichtung (8), die Pumplicht für das optische Pumpen des mindestens einen aktiven Bereichs (2) der mindestens einen Festkörperlasereinheit (1, 25, 31) erzeugen kann;
**dadurch gekennzeichnet, dass** die Laservorrichtung derart ausgebildet ist, dass das Pumplicht während des Betriebs der Laservorrichtung in dem mindestens einen aktiven Bereich (2) eine Mehrzahl von beabstandet zueinander angeordneten optisch gepumpten Kanälen (4, 30) erzeugen kann, in denen jeweils ein Teilstrahl (20, 24) der Laserstrahlung (14, 29, 35) erzeugt werden kann.

2. Laservorrichtung nach Anspruch 1, **dadurch gekennzeichnet, dass** die Laservorrichtung Mittel zur Einbringung des von der mindestens einen Halbleiterlaservorrichtung (8) erzeugten Pumplichtes in den mindestens einen aktiven Bereich (2) der mindestens einen Festkörperlasereinheit (1, 25, 31) aufweist.

3. Laservorrichtung nach Anspruch 2, **dadurch gekennzeichnet, dass** die Mittel zur Einbringung Linsenmittel umfassen, die das von der mindestens einen Halbleiterlaservorrichtung (8) erzeugte Pumplicht zumindest in einer zur Ausbreitungsrichtung (z) des Pumplichtes senkrechten Richtung (y) zumindest teilweise kollimieren können.

4. Laservorrichtung nach Anspruch 3, **dadurch gekennzeichnet, dass** die Linsenmittel als Array von Zylinderlinsen (10) ausgebildet sind.

5. Laservorrichtung nach einem der Ansprüche 2 bis 4, **dadurch gekennzeichnet, dass** die Mittel zur Einbringung eine Anpassungsoptik (11) umfassen, die die Ausdehnung des Pumplichtes in der zu seiner Ausbreitungsrichtung (z) senkrechten Ebene an die Ausdehnung des mindestens einen aktiven Bereiches (2) der mindestens einen Festkörperlasereinheit (1, 25, 31) anpassen kann.

6. Laservorrichtung nach einem der Ansprüche 1 bis 5, **dadurch gekennzeichnet, dass** die mindestens eine Halbleiterlaservorrichtung (8) als Stack von Laserdiodenbarren ausgebildet ist.

7. Laservorrichtung nach einem der Ansprüche 1 bis 6, **dadurch gekennzeichnet, dass** der aktive Bereich (2) transversal gepumpt werden kann, insbesondere aus einer zu der Ausbreitungsrichtung (x) der Laserstrahlung (14) senkrechten Richtung (z).

8. Laservorrichtung nach Anspruch 7, **dadurch gekennzeichnet, dass** der aktive Bereich (2) in der Ausbreitungsrichtung (z) des Pumplichtes kleiner, insbesondere deutlich kleiner, ist als in den dazu senkrechten Richtungen (x, y).

9. Laservorrichtung nach einem der Ansprüche 1 bis 8, **dadurch gekennzeichnet, dass** die optisch gepumpten Kanäle (4, 30) parallel zueinander in dem aktiven Bereich (2) angeordnet sind.

10. Laservorrichtung nach einem der Ansprüche 1 bis 9, **dadurch gekennzeichnet, dass** die Tiefe der optisch gepumpten Kanäle (4, 30) in Ausbreitungsrichtung (z) des Pumplichtes durch die Absorptionsfähigkeit des aktiven Bereiches (2) für Licht mit der Wellenlänge des Pumplichtes gegeben ist.

11. Laservorrichtung nach einem der Ansprüche 1 bis 10, **dadurch gekennzeichnet, dass** die Breite (d) eines jeden der optisch gepumpten Kanäle (4, 30) in einer Richtung senkrecht zur Ausbreitungsrichtung der aus der mindestens einen Festkörperlasereinheit (1, 25, 31) austretenden Laserstrahlung (14, 29, 35) durch die Anordnung und/oder die Beschaffenheit der zur Kollimierung des Pumplichtes verwendeten Linsenmittel gegeben ist.

12. Laservorrichtung nach einem der Ansprüche 1 bis 11, **dadurch gekennzeichnet, dass** die Laservorrichtung einen externen Resonator, insbesondere einen Resonator mit zwei Resonatorspiegeln (6, 22, 23, 36, 37) aufweist.

13. Laservorrichtung nach einem der Ansprüche 1 bis 11, **dadurch gekennzeichnet, dass** die Laservorrichtung einen internen Resornator aufweist, der insbesondere durch zumindest teilweise verspiegelte Austrittsflächen (5, 26, 27, 32, 33) des mindestens einen aktiven Bereiches (2) der mindestens einen Festkörperlasereinheit (1) gebildet wird.

14. Laservorrichtung nach einem der Ansprüche 1 bis 13, **dadurch gekennzeichnet, dass** die Laservorrichtung eine Mehrzahl von Festkörperlasereinheiten (1, 25, 31) umfasst, die insbesondere derart angeordnet sind, dass die aus den einzelnen Festkörperlasereinheiten (1, 25, 31) austretenden Laserstrahlen im Wesentlichen parallel zueinander sind.

15. Laservorrichtung nach einem der Ansprüche 1 bis 14, **dadurch gekennzeichnet, dass** die mindestens eine Festkörperlasereinheit (1, 25, 31) mit einem Kühlkörper (7, 15, 16, 17, 21 , 38) wärmeleitend verbunden ist.

16. Laservorrichtung nach Anspruch 15, **dadurch gekennzeichnet, dass** auf der Außenseite des Kühlkörpers (7, 15, 16, 17, 21, 38) eine Mehrzahl von Festkörperlasereinheiten (1, 25, 31) angebracht ist, wobei aus diesen Festkörperlasereinheiten (1, 25, 31) austretende Laserstrahlen im Wesentlichen parallel zueinander sind.

17. Laservorrichtung nach einem der Ansprüche 15 oder 16, **dadurch gekennzeichnet, dass** der Kühlkörper (7, 15, 16) einen rechteckigen, einen dreieckigen, einen quadratischen, einen fünfeckigen, einen sechseckigen, einen siebeneckigen, einen achteckigen oder einen anderen vieleckigen Querschnitt aufweist.

18. Laservorrichtung nach Anspruch 16, **dadurch gekennzeichnet, dass** die Festkörperlasereinheiten (1 , 31 ) auf der Außenseite des Kühlkörpers (21) in Ausbreitungsrichtung (x) der Laserstrahlung hintereinander angeordnet sind, wobei insbesondere die optisch gepumpten Kanäle (4) in Ausbreitungsrichtung (x) der Laserstrahlung im Wesentlichen miteinander fluchten.

19. Laservorrichtung nach Anspruch 16, **dadurch gekennzeichnet, dass** der Kühlkörper (17, 38) mindestens eine abgestufte Oberfläche aufweist, wobei auf mindestens zwei Stufen (18a, 18b, 18c, 18d; 39a, 39b, 39c, 39d) der gestuften Oberfläche jeweils mindestens eine Festkörperlasereinheit (1, 25, 31) angeordnet ist.

20. Laservorrichtung nach einem der Ansprüche 1 bis 19, **dadurch gekennzeichnet, dass** die Festkörperlasereinheit (25, 31) derart ausgebildet ist, dass die in ihr erzeugte Laserstrahlung (29, 35) im Bereich ihrer der Pumplichtquelle zugewandten Oberfläche eine Totalreflexion erfährt.

21. Laservorrichtung nach Anspruch 20, **dadurch gekennzeichnet, dass** die Austrittsflächen (26, 27, 32, 33) der mindestens einen Festkörperlasereinheit (25, 31 ) mit ihrer der Pumplichtquelle zugewandten Eintrittsfläche (28, 34) einen Winkel kleiner als 90° einschließen.

22. Verfahren zum Betrieb einer Laservorrichtung, insbesondere einer Laservorrichtung nach einem der Ansprüche 1 bis 21, umfassend:
- mindestens eine Festkörperlasereinheit (1) mit mindestens einem aktiven Bereich (2), in dem Laserstrahlung (14) erzeugt werden kann;
- mindestens eine Halbleiterlaservorrichtung (8), die Pumplicht für das optische Pumpen des mindestens einen aktiven Bereichs (2) der mindestens einen Festkörperlasereinheit (1) erzeugen kann;
**dadurch gekennzeichnet, dass** das Pumplicht in dem mindestens einen aktiven Bereich (2) eine Mehrzahl von beabstandet zueinander angeordneten optisch gepumpten Kanälen (4) erzeugt, in denen jeweils ein Teilstrahl der Laserstrahlung erzeugt wird.
